# EUROPÄISCHE PATENTSCHRIFT

(11) **EP 1 927 152 B1**
(45) Veröffentlichungstag und Bekanntmachung des Hinweises auf die Patenterteilung: **29.07.2009**
(21) Anmeldenummer: 05792153.8
(22) Anmeldetag: 21.09.2005
(51) Int. Cl.: H01M 10/48, H01M 2/10

(54) **AKKUPACK UND ELEKTROHANDWERKZEUGGERÄT**
RECHARGEABLE BATTERY PACK AND ELECTRICAL HAND TOOL DEVICE
BATTERIE D'ACCUMULATEURS ET MACHINE-OUTIL ELECTRIQUE MANUELLE

(43) Veröffentlichungstag der Anmeldung: 04.06.2008
(73) Patentinhaber: Metabowerke GmbH, 72622 Nürtingen (DE)
(72) Erfinder: WIESNER, Bernd, 73277 Owen (DE); LIERSCH, Ralph, 72555 Metzingen (DE); STICKEL, Wolfgang, 72660 Beuren (DE)
(74) Vertreter: Dreiss
(86) Internationale Anmeldenummer: PCT/EP2005/010206
(87) Internationale Veröffentlichungsnummer: WO 2007/033695

(56) Entgegenhaltungen:
- DE-A1- 4 036 374
- DE-A1- 4 234 231
- DE-U1- 9 016 987
- US-A- 3 763 416
- US-A1- 2005 046 393

## Beschreibung

Die Erfindung betrifft einen Akkupack sowie ein Elektrohandwerkzeuggerät, in dem dieser Akkupack eingesetzt werden kann.

Derartige Akkupacks sind wiederaufladbare Akkumulatoren für elektrisch betriebene Geräte. Hierzu gehören insbesondere Elektrohandwerkzeuggeräte. Beim Einsatz von Elektrohandwerkzeuggeräten im Baustellenbereich ist die Verwendung von akkubetriebenen Werkzeugen vorteilhaft, da keine Kabel und insbesondere keine Verlängerungskabel verwendet werden müssen und darüber hinaus auch die Gefahr einer Beschädigung des Kabels durch das Werkzeug entfällt.

In der Regel sind hierbei mehrere Akkumulatoren oder Akkuzellen zu Akkupacks zusammengefasst, die sich einfach an das Werkzeug anstecken lassen.

Die Akkupacks sind zumeist in einem Akkugehäuse angeordnet, das mit dem Gerätegehäuse des Elektrohandwerkzeuggeräts koppelbar ist, wobei beim Koppeln der beiden Gehäuse der Motor elektrisch an den Akkupack angekoppelt und so mit Strom versorgt wird. Zum Koppeln der beiden Geräte ist gewöhnlich das Akkugehäuse mit einer überstehenden Verrastvorrichtung versehen, die in eine komplementäre Einsteckbuchse des Gerätegehäuses eingeschoben und in dieser verastet wird. Die elektrische Kontaktierung erfolgt dabei gewöhnlich im Bereich der Verrastungsvorrichtungsvorrichtung. Nach Entladung des Akkus kann dieser dann gegen einen weiteren Akku ausgetauscht werden oder es kann unmittelbar ein Ladevorgang am Gerät vorgenommen werden. Insbesondere ist jedoch vorgesehen, dass der leere Akku in ein Ladegerät eingesetzt werden kann, um erneut geladen zu werden. Hierbei ist eine besonders kurze Ladenszeit erstrebenswert, um den Akku möglichst schnell wiedereinsatzbereit zu machen.

Dabei ist es bekannt, dass das Aufladen eines Akkus von seiner Temperatur abhängt. Sofern ein Akkupack eine zu hohe Temperatur besitzt, sinkt die in ihm speicherbare Stromkapazität ab.

Insofern ist es erstrebenswert, die Temperatur eines Akkupacks zu bestimmen. Aus diesem Grund werden in Akkupacks vielfach Temperaturfühler eingesetzt. So offenbart beispielsweise die DE 42 34 231 A1 einen wiederaufladbaren Akku, bei dem ein Temperaturfühler vorgesehen ist, der bei Erreichen einer vorbestimmten Temperatur den Akku abschaltet. Der Akku liefert dann keinen Strom mehr, obwohl er noch nicht vollständig entladen ist. Da eine Akkukühlzeit entfällt, lässt er sich aber sofort wieder aufladen. Trotz der kürzeren Entladedauer soll der Akku über einen größeren Zeitraum zur Verfügung stehen. Mittels des Temperaturfühlers soll die Temperatur der Akkuzellen bestimmt werden.

Des weiteren ist aus DE 90 16 987 U1 ein Akkupack bekannt, bei dem ein metallischer Klemmbügel einen Temperatursensor gegen einen Akkumulator drückt. Dabei ist der metallische Klemmbügel mit einem seiner Enden mittels einer Spannschraube und einer Spannmutter an einer Spannpratze befestigt, die an einer metallischen Bodenplatte festgelegt ist.

Des weitere ist es bekannt, Temperaturfühler irgendwo im Akkupack so anzuordnen, dass möglichst eine Berührung mindestens einer Zellenwand stattfindet. Da die Temperaturfühler in herkömmlicher Weise lose in den Akkupack eingefügt werden, verbleibt immer eine kleine Luftstrecke bzw. ein Spalt zwischen der Oberfläche des Temperaturfühlers und der nächstliegenden Zelle. Auf diese Weise werden jedoch die gemessenen Temperaturen durch das dazwischen liegende Luftpolster verfälscht.

Es ist daher Aufgabe der Erfindung, einen Akkupack sowie ein Elektrohandwerkzeuggerät bereitzustellen, bei dem auf einfache Weise ein Temperaturfühler so angeordnet werden kann, dass eine möglichst genaue Temperaturmessung möglich ist.

Die Erfindung löst diese Aufgabe durch einen Akkupack mit den Merkmalen des Anspruchs 1 sowie ein Elektrohandwerkzeuggerät mit den Merkmalen des Anspruchs 6.

Vorteilhaft bei einer solchen Gestaltung ist, dass durch die Federvorspannung erreicht werden kann, dass der Temperaturfühler stets gegen mindestens eine Akkuzelle anliegt. Dies wird selbst dann erreicht, wenn der Akkupack aufgrund von Bewegungen und Schwingungen z.B. eines Elektrohandwerkzeuggeräts, beispielsweise einer Schlagbohrmaschine oder eines Bohrhammers belastet wird. Das Federelement kann dabei so ausgestaltet sein, dass es in sämtlichen Betriebszuständen sowie in einem gewissen darüber hinausgehenden Sicherheitsbereich gewährleistet, dass der Temperaturfühler gegen eine Akkuzelle anliegt.

Dabei ist erfindungsgemäß vorgesehen, dass das Federelement eine Lasche, nämlich eine Kunststofflasche ist. Diese Lasche kann insbesondere einstückig mit einem Zellenhalter verbunden sein, der ebenfalls ein Kunststoffteil ist. Der Zellenhalter dient dabei der Aufnahme der einzelnen Akkuzellen und trennt diese voneinander um Kurzschlüsse zu verhindern. Akkuzellen und Zellenhalter bilden gemeinsam das sogenannte Corepack. Auf diese Weise wird die Herstellung der Bauteile erheblich vereinfacht. Darüber hinaus ist auch keine weitere Montage der Federlasche notwendig, sofern diese als Teil des Zellenhalters ausgebildet ist. Die Federlasche wird dabei insbesondere durch ein einseitig festgelegtes stabartiges Kunststoffelement gebildet.

Darüber hinaus kann auch vorgesehen sein, dass der Temperaturfühler gegen die Wandung zweier Akkuzelle anliegt. Hierbei kann der Temperaturfühler insbesondere in einen Zwischenraum zwischen zwei Akkuzellen gedrückt werden, so dass er Kontakt zu den Wandungen zweier Akkuzellen erlangt. Auf diese Weise ist eine noch exaktere Erfassung der Zellentemperatur möglich.

Darüber hinaus kann vorgesehen sein, dass der Temperaturfühler direkt mit einer entsprechenden Überwachungselektronik verbunden ist. Insbesondere kann der Temperaturfühler direkt in die Überwachungselektronik eingelötet werden. Auf diese Weise kann verhindert werden, dass ein Stecksystem notwendig ist und die Elektronik kann so zusammen' mit dem Temperaturfühler getestet werden. Die Überwachungselektronik ist dabei vorteilhaft Teil der ohnehin vorgesehenen Akku-Elektronik.

Durch die Vorsehung eines Federelementes wird darüber hinaus die Montage des Temperaturfühlers deutlich erleichtert und es ist auch eine Demontage möglich. Die Montage kann hier ohne Hilfswerkzeug oder Klebstoffe erfolgen. Dadurch erfolgt anders als z.B. bei eingeklebten Temperaturfühlern keine Störung des Kühlluftstroms, der einen Akkupack durchströmt, um eine unnötige und begrenzbare Aufheizung der Akkuzellen zu verhindern.

Es wäre auch grundsätzlich denkbar, dass der Zellenhalter eine Öffnung zur Aufnahme des Temperaturfühlers oder des Federelements aufweist. Diese Öffnung kann insbesondere an den Temperaturfühler angepasst sein und zu dessen Führung und Halterung dienen. Der Temperaturfühler könnte über die Öffnung in den Zellenhalter eingeschoben und dann durch das Federelement in Richtung auf mindestens eine Akküzelle belastet werden. Der Temperaturfühler könnte (erst) bei der Endmontage des Akkupacks unmittelbar mit eingebaut werden kann. Er könnte dann mit der Überwachungselektronik durch Litzen verbunden werden.

Die Überwachungselektronik für den Akkupack kann im Akkupack selbst untergebracht sein. Auf diese Weise wird eine Vormontage des gesamten Akkupacks ermöglicht und darüber hinaus auch eine Testung des Akkupacks ohne dass dieser hierzu in ein Elektrohandwerkzeuggerät eingesetzt werden müsste.

Dabei ist es besonders bevorzugt, wenn die Akkuzellen Lithiumzellen sind. Lithiumzellen besitzen gegenüber herkömmlichen Akkuzellen erhebliche Vorteile bezüglich der zur Verfügung stehenden Zeitspanne, in der diese Energie beispielsweise an ein Elektrowerkzeug abgeben können. Auch hinsichtlich der Lebensdauer weisen Lithiumzellen Vorteile auf, da der Memory-Effekt nicht so stark ausgeprägt ist.

Des weiteren umfasst die Erfindung ein Elektrohandwerkzeuggerät mit einem Akkupack, wie er vorstehend beschrieben worden ist zum Versorgen eines

Elektromotors des Elektrohandwerkzeuggeräts mit elektrischer Energie, wobei der Akkupack mit dem Elektrohandwerkzeuggerät lösbar verrastbar ist.

Weitere Vorteile und Merkmale der Erfindung ergeben sich aus den übrigen Anmeldungsunterlagen. Die Erfindung soll im Folgenden anhand einer Zeichnung näher erläutert werden. Dabei zeigen:
- Figur 1: einen Akkupack in ein einer perspektivischen Darstellung;
- Figur 2: eine erste Ansicht eines Corepacks des Akkupacks nach Figur 1;
- Figur 3: eine zweite Ansicht des Corepacks des Akkupacks nach Figur 1;
- Figur 4: das Detail B aus Figur 2;
- Figur 5: das Detail F aus Figur 3;
- Figur 6: einen Schnitt durch den Akkupack nach Figur 1.

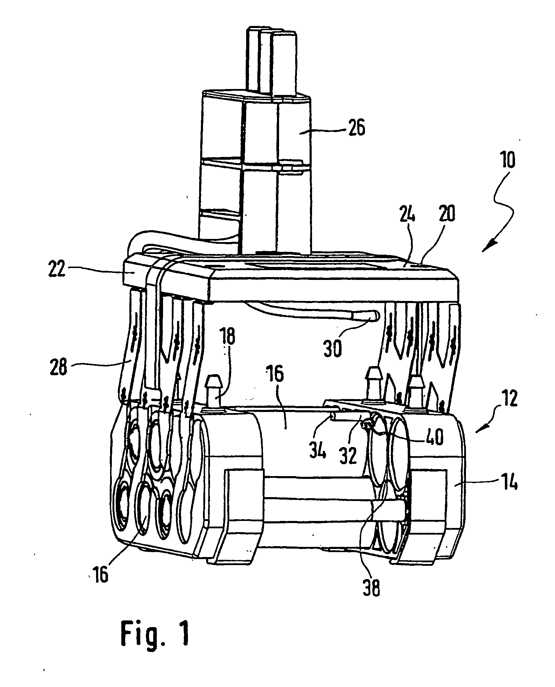

Figur 1 zeigt einen Akkupack, der in seiner Gesamtheit mit dem Bezugszeichen 10 versehen ist. Nicht dargestellt ist hierbei das äußere Akkugehäuse, das den Akkupack 10 umgibt. Der Akkupack umfasst hierbei einen Corepack 12 umfassend einen Zellenhalter 14 sowie Akkuzellen 16, wobei der her vorliegende Zellenhalter 14 acht Akkuzellen 16 aufnehmen kann. Zur besseren Erkennbarkeit des später zur erläuternden Temperaturfühlers sind hier.die in Sichtrichtung ersten drei Akkuzellen 16 nicht dargestellt.

Dabei sind jeweils zwei Akkuzellen 16, nämlich die jeweils übereinander angeordneten Akkuzellen 16 parallel geschaltet. Eine Parallelschaltung von Akkuzellen 16 ist bei Lithiumzellen, wie sie erfindungsgemäß verwendbar sein sollen, möglich, im Gegensatz zu Nickel-Cadmium-Akkuzellen.

Die jeweiligen Zellenpaare, die parallel geschaltet sind, werden dann in einer Reihenschaltung hintereinander angeordnet. Das heißt im vorliegenden Fall werden jeweils vier Akkupaare hintereinander geschaltet.

Die Akkuzellen 16 sind im Zellenhalter 14 so aufgenommen, dass Kurzschlüsse, aber auch mechanische Beschädigungen der elektrischen Kontaktierungen und auch der Akkuzellen 16 selbst vermieden werden. Darüber hinaus weist der Zellenhalter 14 Verbindungselemente 18 auf, die in entsprechende Aussparrungen 20 in einem Elektronikgehäuse 22 des Akkupacks 10 eingreifen. Das Elektronikgehäuse 22 nimmt im vorliegenden Fall die Überwachungselektronik (nicht dargestellt) auf, die insbesondere in das Elektronikgehäuse 22 fest eingegossen sein kann, um sie so gegen Erschütterungen und ähnliches zu schützen. Darüber hinaus ist auf der Oberseite 24 des Elektronikgehäuses der Verbindungsdom 26 zum späteren elektrischen.Anschluss und auch mechanischen Kopplung an ein Elektrohandwerkzeuggerät vorgesehen. Das Zusammenfügen von Elektronikgehäuse 22 und Corepack 12 erfolgt über eine formschlüssige Rastverbindung. Am Elektronikgehäuse 22 sind darüber hinaus auch bereits Verbindungselemente 28 angeordnet, die später mit den einzelnen Akkuzellen 16 verbunden werden können und so zum einen zur elektrischen Kontaktierung der Akkuzellen 16 untereinander und zum anderen zur Verbindung der Akkuzellen 16 mit der Überwachungselektronik dienen. Unmittelbar an der Elektronik angebracht ist darüber hinaus ein Temperaturfühler 30, der gemeinsam mit der Überwachungselektronik auf den Corepack 12 aufgesetzt werden kann. Der Temperaturfühler ist dabei zumindest teilweise flexibel und weist eine stabförmige Gestalt auf, die an einem Ende an der Elektronik festgelegt wird.

Darüber hinaus weist der Corepack 12 ein Federelement 32 im Bereich des Temperaturfühlers 30 auf, das einstückig mit dem Zellenhalter 14 des Corepacks 12 ausgebildet ist. Das Federelement 32 ist hierbei eine angeformte federnde Kunststofflasche, die ein freies Ende 34 aufweist sowie ein festgelegtes Ende 36, mit dem sie in den Zellenhalter 14 übergeht. Die Federeigenschaften des Federelements 32 hängen dabei sowohl von den Querschnittsform des Federelements als auch vom verwendeten Material sowie der Länge des Federelementes 32 ab. Unterhalb des Federelements 32 mit einem Kreis gekennzeichnet ist eine Öffnung 40 angedeutet, die eine zusätzliche Führungsfunktion für den Temperaturfühler 30 ausüben könnte (dies ist aber vorliegend nicht verwirklicht). Die Öffnung könnte auch dazu dienen, den Temperaturfühler 30 zu montieren und gegen Verrutschen bzw. Schwingungen im Akkupack 10 zu sichern.

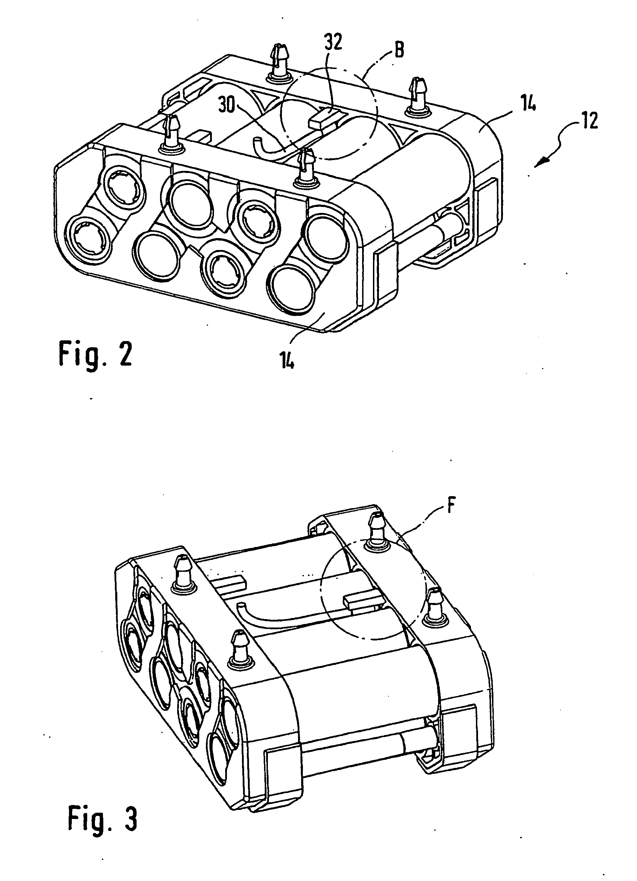

Figuren 2 und 3 zeigen verschiedene Ansichten des Corepacks 12 mit Zellenhalter 14 und daran angeordnetem Federelement 32. Zur besseren Verdeutlichung ist hier der Temperaturfühler 30 ebenfalls (teilweise) dargestellt.

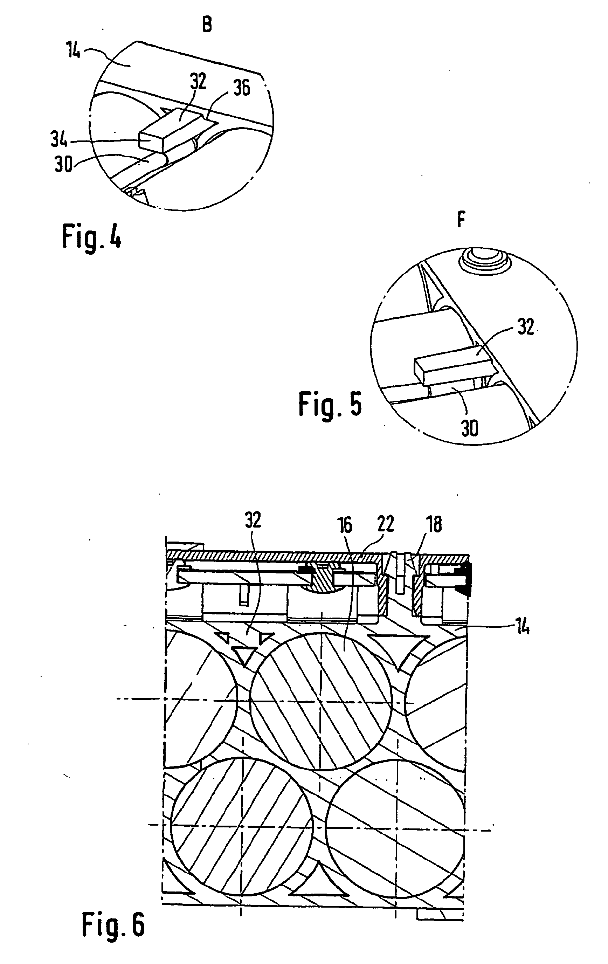

Figuren 4 und 5 zeigen einen Ausschnitt aus Figur 2 bzw. Figur 3, und zwar dort das mit B bzw. F gekennzeichnete Detail, wobei hier die Federlasche 32 sowie der Temperaturfühler 30 zu erkennen sind. Die Federlasche 32 sorgt dafür, dass der Temperaturfühler 30 unmittelbar gegen die Wandung einer Akkuzelle 16 gedrückt wird und diese Wandung berührt, so dass ein guter thermischer Kontakt hergestellt ist.

Eine Schnittdarstellung gemäß Figur 2 bzw. Figur 3 allerdings mit montiertem Elektronikgehäuse 22 ist in Figur 6 dargestellt. Es ist das einstückig mit dem Zellenhalter 14 verbundene Federelement 32 zu erkennen. Auf diese Weise lässt sich ein Akkupack 10, insbesondere für ein Elektrohandwerkzeuggerät bereitstellen, bei dem vermieden werden kann, dass die exakte Erfassung der Zellentemperatur durch ein zwischen Temperaturfühler 30 und Wandung der Akkuzellen 16 bestehendes Luftpolster behindert wird.

## Patentansprüche

1. Akkupack für ein elektrisches Gerät mit mindestens einer Akkuzelle (16) sowie einem Temperaturfühler (30) zur Messung der Temperatur mindestens einer Akkuzelle (16), wobei ein Federelement (32) vorgesehen ist, dass den Temperaturfühler (30) in Richtung auf mindestens eine Akkuzelle (16) belastet, **dadurch gekennzeichnet, dass** das Federelement (32) mit einem Zellenhalter (14) zur Aufnahme und Halterung der Akkuzellen (16) verbunden, ist wobei das Federelement (32) als Lasche ausgebildet ist und Zellenhalter (14) und Federelement (32) Kunststoffteile sind.

2. Akkupack nach Anspruch 1, **dadurch gekennzeichnet, dass** das Federelement den Temperaturfühler (30) gegen eine Wandung mindestens einer Akkuzelle (16) anlegt.

3. Akkupack nach Anspruch 1 oder 2, **dadurch gekennzeichnet, dass** das Federelement (32) den Temperaturfühler (30) gegen eine Wandung mindestens zweier Akkuzellen (16) anlegt.

4. Akkupack nach einem der vorangehenden Ansprüche, **dadurch gekennzeichnet, dass** die Akkuzellen (16) Lithiumzellen sind.

5. Akkupack nach einem der vorangehenden Ansprüche, **dadurch gekennzeichnet, dass** das Federelemente (32) einstückig mit dem Zellenhalter (14) verbunden ist.

6. Elektrohandwerkzeuggerät mit einem Akkupack (10) nach einem der vorangehenden Ansprüche, zum Versorgen eines Elektromotors des Elektrohandwerkzeuggeräts mit elektrischer Energie, wobei der Akkupack (10) mit dem Elektrohandwerkzeuggerät lösbar verbindbar, insbesondere verrastbar ist.

## Claims

1. Battery pack for an electrical device with at least one battery cell (16) and a temperature probe (30) to measure the temperature of at least one battery cell (16), whereby a spring element (32) is provided that bears on the temperature probe (30) in the direction of at least one battery cell (16), **characterised in that** the spring element (32) is connected with a cell holder (14) to accept and retain the battery cells (16), whereby the spring element (32) is formed as a clip and cell holder (14) and spring element (32) are plastic parts.

2. Battery pack in accordance with claim 1, **characterised in that** said spring element positions the temperature probe (30) against a wall of at least one battery cell (16).

3. Battery pack in accordance with claim 1 or 2, **characterised in that** the spring element (32) positions the temperature probe (30) against a wall of at least two battery cells (16).

4. Battery pack in accordance with one of the previous claims, **characterised in that** the battery cells (16) are lithium cells.

5. Battery pack in accordance with one of the previous claims, **characterised in that** the spring element (32) is connected to form one piece with the cell holder (14).

6. Electrical hand device with a battery pack (10) in accordance with one of the previous claims to provide an electrical supply to an electric motor in the electrical hand device, whereby the battery pack (10) can be detachably connected to the electrical hand device, in particular by latching.

## Revendications

1. Batterie d'accumulateurs pour appareil électrique, comprenant au moins une cellule d'accumulateur (16) ainsi qu'une sonde de température (30) pour mesurer la température d'au moins une cellule d'accumulateur (16), dans laquelle un élément de ressort (32) est prévu qui sollicite la sonde de température (30) en direction d'au moins une cellule d'accumulateur (16), **caractérisée en ce que** l'élément de ressort (32) est relié à un support de cellules (14) pour recevoir et retenir les cellules d'accumulateur (16), dans laquelle l'élément de ressort (32) est réalisé comme une languette et le support de cellules (14) et l'élément de ressort (32) sont des pièces en matière plastique.

2. Batterie d'accumulateurs selon la revendication 1, **caractérisée en ce que** l'élément de ressort applique la sonde de température (30) contre une paroi d'au moins une cellule d'accumulateur (16).

3. Batterie d'accumulateurs selon la revendication 1 ou 2, **caractérisée en ce que** l'élément de ressort (32) applique la sonde de température (30) contre une paroi d'au moins deux cellules d'accumulateur (16).

4. Batterie d'accumulateurs selon l'une quelconque des revendications précédentes, **caractérisée en ce que** les cellules d'accumulateur (16) sont des piles au lithium.

5. Batterie d'accumulateurs selon l'une quelconque des revendications précédentes, **caractérisée en ce que** l'élément de ressort (32) est relié d'une seule pièce au support de cellules (14).

6. Outil à main électrique avec une batterie d'accumulateurs (10) selon l'une quelconque des revendications précédentes, pour alimenter un moteur électrique de l'outil à main électrique en énergie électrique, dans lequel la batterie d'accumulateurs (10) peut être reliée de façon amovible à l'outil à main électrique, en particulier enclenchée dans celui-ci.
